# EUROPEAN PATENT SPECIFICATION

(11) **EP 2 982 468 B1**
(45) Date of publication and mention of the grant of the patent: **04.10.2017**
(21) Application number: 15179809.7
(22) Date of filing: 05.08.2015
(51) Int. Cl.: B23K 7/00

(54) **METHOD AND SYSTEM FOR CUTTING A STRAND OF A CONTINUOUS CASTING**
VERFAHREN UND VORRICHTUNG ZUM SCHNEIDEN VON STRANGGUSSMATERIAL
PROCÉDÉ ET DISPOSITIF POUR LA DÉCOUPE D'UNE PIECE OBTENUE PAR COULÉE CONTINUE

(30) Priority: 06.08.2014 IT MI20141438
(43) Date of publication of application: 10.02.2016
(73) Proprietor: A.L.B.A. S.r.l., 16153 Genova (IT)
(72) Inventor: D'OTTAVI, Riccardo, 16153 Genova (GE) (IT); PATRATTI, Gabriele, 16153 Genova (GE) (IT); LICATA, Giuseppe, 16153 Genova (GE) (IT)
(74) Representative: Kratter, Carlo

(56) References cited:
- EP-A1- 1 918 055
- FR-A1- 2 029 027
- US-A1- 2013 221 585

## Description

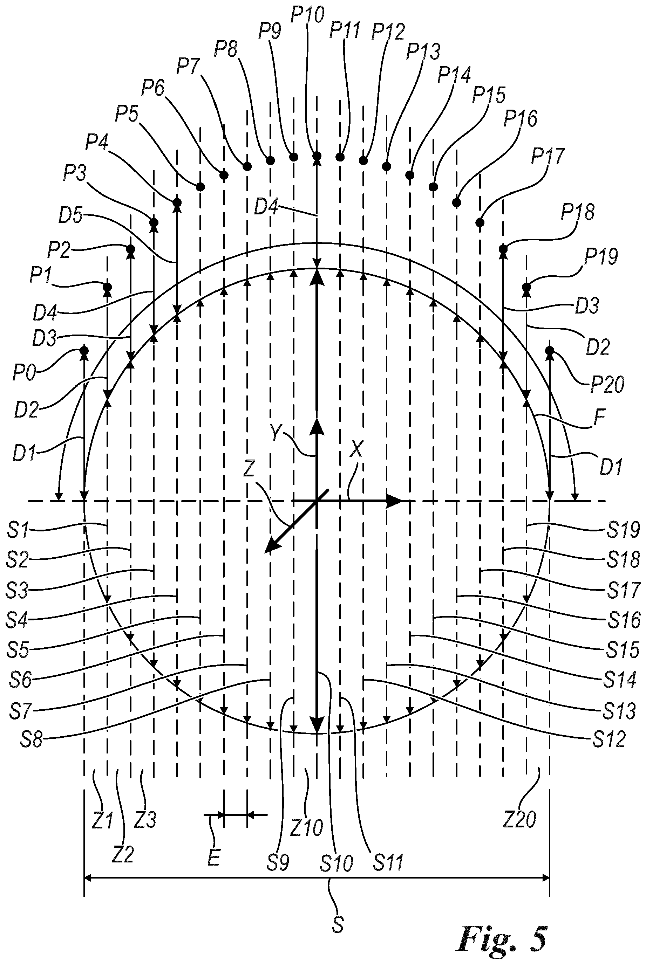

It is an object of the present invention to provide a system and a method for cutting a continuous casting, wherein said casting is cut transversally relative to a longitudinal axis of the casting and wherein the cutting cross-section of said casting has a plurality of sections (designated as Z1-Z20 in the enclosed figure 5) having different thicknesses (also highlighted in figure 5 and designated as S1-S19).

Thickness is to be construed as the maximum distance between the upper and the lower surfaces, opposite each other, of the sections Z1-Z20 (fig.5) dividing the cutting cross-section of the casting.

Said sections Z1-Z20 being laterally bound by sides parallel to one another and to a vertical Y-axis (fig. 5) at right angles with the Z-axis of the casting feed.

In particular, the invention relates to continuous castings having a substantially circular or (regular or irregular) elliptical cross-section, or else a "Beam Blank", namely substantially H-shaped, cross-section.

In the present context, fluid is to be construed as both a fluid consisting of a single fuel and as a fluid consisting of a mixture of fuels. Oxycutting systems for continuous casting, suitable to cut castings with a circular cross-section (their diameter being comprised between: 100mm and 1000mm), are known as such. The conventional cutting technique provides for cutting being performed using a torch suitable to generate at first a heating flame locally raising the temperature of the continuous casting strand to be cut to at least 1000°C and fed by a heating fluid, such as for example a gas mixture (for example methane and oxygen), wherein at a later time (as a rule after a few seconds, for example 5-10 seconds), in addition to the heating flame (fed by the heating fluid) a cutting flame is also used for cutting, fed with pure oxygen at a steady pressure and flowrate.

In the known oxycutting system the torch is automatically fed is two directions (X, Y) which are orthogonal to each other and at right angles with a casting feed direction (Z), during both heating and cutting, so that the torch tip is at an optimal distance from the surface of the casting to be cut.

In known systems both heating and cutting are performed by feeding to the torch the cutting fluid (oxygen and/or methane) at a constant flowrate depending on the maximum thickness of the cross-section to be cut and handling the torch at a variable speed in the X-direction (transversally to the casting feed direction).

This constant flowrate for the fluids used in the cutting step is selected depending on the thickness of the casting to be cut: as the casting thickness changes, the flowrate of the cutting fluid also varies, but then remains constant during the whole cutting step.

EP 1 918 055 A1 discloses a method and means for cutting a continuous casting, wherein, in order to reduce the amount of gas required for cutting the casting, the gradual reduction by at least 25% of the pressure and the amount of the heating fluids only (gas and oxygen) from the start to the end of the cutting path is described.

US2013/221585 discloses a method and a system for monitoring the temperature of a torch flame for cutting pieces of material, in particular for cutting a continuous casting; wherein the flowrate of the heating fluids (oxygen and heating fuel) is at first increased and then decreased according to a linear function only during the heating process of the metal piece to be cut. This prior art discloses that, in order to monitor the temperature of the heating flame of the cutting torch, the following parameters can be selected: the desired flame temperature, the metal type, the overall thickness of the metal piece to be cut. These parameters can also be used in order to determine the optimal value of the flowrate of the cutting oxygen while the metal piece is being cut, however said flowrate is kept constant during cutting.

FR2029 027 discloses a device for tracing a drawing (pattern tracing machine) having a head suitable to recognize a drawing (pattern tracking head) and a cutting head of a metal flat plate, fed by a heating fluid and by a cutting fluid and comprising an on/off monitoring system of the feeding of said fluids.

The known cutting systems and methods still involve high consumption of oxygen and fuel gas (such as for example methane), often perform an "imprecise" cut and are highly noisy, where the section of the casting to be cut is not rectangular or square, but is, for example, circular or elliptical or has a shape of the Beam Blank type, namely the cutting cross-section of the casting has a plurality of sections (Z1-Z20) having different thicknesses (S1-S19) from one another.

The purpose of the present invention is to implement a system and a method for cutting a continuous casting of the type specified above, overcoming the drawbacks of the prior art known systems and methods and, in particular, minimizing the consumption of fluid fuels both upon cutting and upon heating the casting strand to be cut, allowing better-quality cuts and reducing the noise of the system. These and other purposes which will appear evident to a person skilled in the art are achieved by a method according to claim 1 and a system according to claim 10, respectively. For a better understanding of the present invention, drawings are herewith enclosed by way of example but not by way of limitation, wherein:
- fig. 1 shows a schematic view of a cutting system according to the invention,
- figg. 2 and 3 show, respectively, a side schematic view and a front schematic view of a part of the cutting system,
- fig. 4 shows a schematic view of the handling of cutting torch of the cutting system according to the invention,
- fig. 5 shows a cross-sectional view of a strand of continuous casting to be cut, divided into a plurality of sections having different thicknesses and different parts corresponding to different working stages of a cutting torch,
- fig. 6A shows a diagram of the flowrate variation of the cutting fluid fed when cutting a continuous casting with a diameter of 850 mm, as the thickness of the sections (Z1 Z20) into which said cross-section to be cut has been divided changes;
- fig. 6B shows a first diagram of the variation of the flowrate of the fluids fed when heating a continuous casting with a diameter of 850 mm, as the thickness of the sections (Z1 Z20) into which said cross-section to be cut has been divided changes;
- fig. 6C shows a diagram of the variation of the speed of the cutting device being handled transversally to the casting feed direction when cutting a continuous casting with a diameter of 850 mm, as the thickness of the sections (Z1 Z20) into which said cross-section to be cut has been divided changes.

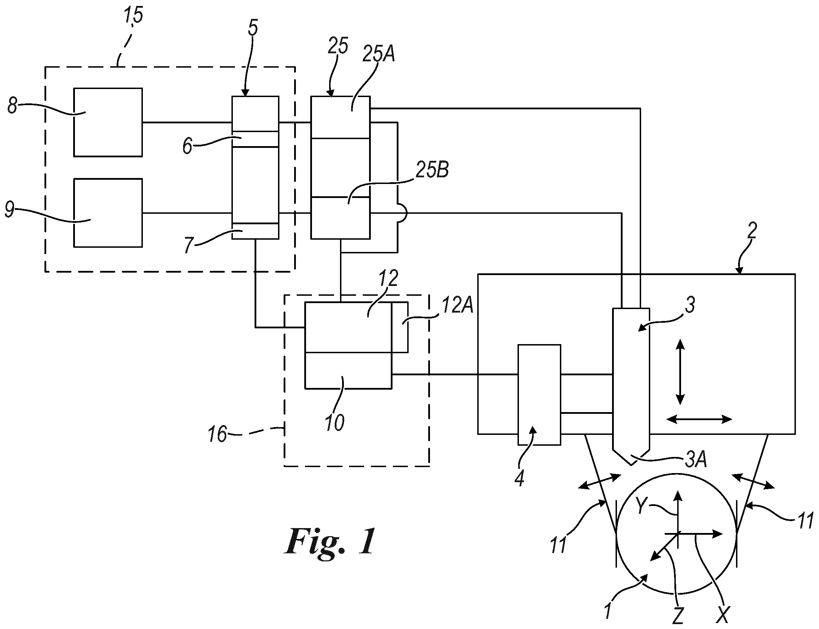

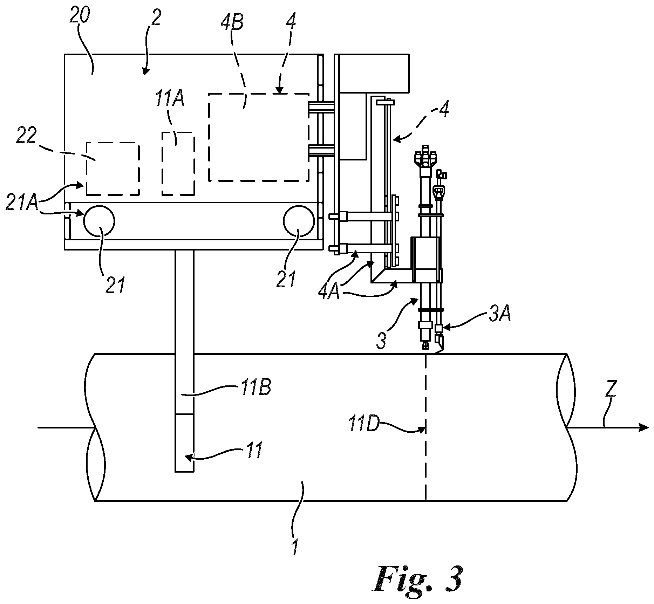

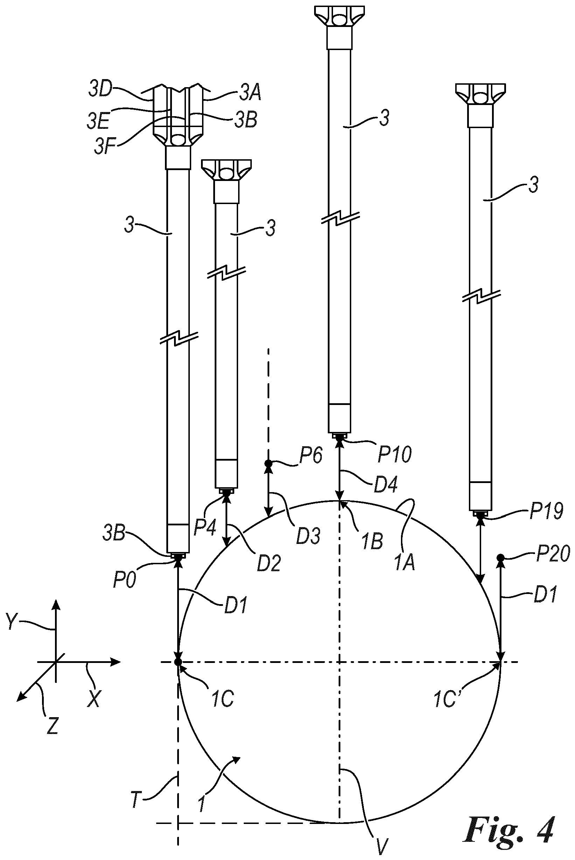

Figure 1 schematically shows a system for cutting a strand 1D (fig. 3) of a continuous casting 1, comprising:
- a device 2 for supporting and handling at least one cutting and heating device 3 for said strand 1D of continuous casting 1 to be cut, wherein said supporting and handling device 1 provides means 4 for handling said cutting and heating device 3 in a plurality of different cutting and heating working positions P0- P20 of said strand 1D to be cut, so that an end portion or nozzle 3A of said cutting and heating device 3, suitable to allow a cutting or heating flame generated by a first or a second fluid fuel to flow out, is at least at a preset distance D1-D5 (fig. 4) relative to a section F (fig. 5) of the outer surface 1A of the strand 1D of continuous casting 1 to be cut, while said strand 1D is being cut;
- feeding means 5 suitable to provide to the cutting and heating device 3:
   - a first gaseous fluid (wherein said first fluid is a mixture preferably of oxygen and gas, for example methane) for heating the strand 1D of continuous casting to be cut,
   - and a second gaseous fluid for cutting said strand 1D of heated casting;
   wherein said feeding means 5 comprise first 6 and second 7 means (for example on/off solenoid valves) for adjusting and controlling the feeding of said first and second fluid, respectively, originating from at least one first source 8 and one second source 9, respectively, and fed to said heating and cutting device 3,
- first control means 10 for the handling means 4 of the cutting and heating device 3.

Such a system as described above is known to a person skilled in the art and accordingly non described in detail hereinafter.

The system according to the invention provides second control means 12, suitable to monitor, at least during cutting, the means 25A for adjusting and controlling the flowrate of at least the second cutting fluid fed to the cutting device 3 and to change the feeding of said second cutting fluid fed to the cutting device 3 depending on the cutting working position P0-P20 achieved by said cutting device 3, so that at least one central cutting working position P10, corresponding to a central section Z10 of said strand 1D of the continuous casting 1 to be cut having the highest thickness S1 (fig. 5) is being matched by a higher flowrate of said second cutting fluid to the cutting device 3 compared to the flowrate fed in an extreme cutting start working position P0, P20 of said cutting device, corresponding to an extreme side section Z1, Z20 of the strand 1D of the continuous casting 1 to be cut. Advantageously, according to the invention, the second control means 12 are suitable to monitor at least during heating also the means 25B for adjusting and controlling the flowrate of the first heating fluid fed to the cutting and heating device 3, so as to change also the flowrate of the first heating fluid fed to the cutting and heating device 3 during the heating of the strand 1D of the continuous casting 1 to be cut, depending on the heating working P0-P20 of said cutting and heating device 3. According to a first possible adjustment, the flowrate of the first heating fluid fed to the cutting and heating device 3 during the heating of the strand 1D of the continuous casting 1 to be cut is adjusted so that at least one central working position P4, corresponding to a central section 1B of the strand 1D of the continuous casting 1 to be cut having the highest thickness S1 is being matched by a lower flowrate of said first fluid to the heating device 3 compared to the flowrate fed in an extreme working position P0, P20 of said heating device, corresponding to an extreme side section Z1, Z20 of the strand of the continuous casting 1 to be cut.

More particularly, as is known to a person skilled in the art, the feeding means 5 (suitable to feed to the cutting and heating device 3: a first and a second gaseous fluid for heating and cutting the strand 1D of continuous casting 1 to be heated and cut) and the first 6 and second 7 members adjusting the feeding of said first and second fluid (coming from at least one first source 8 and at least one second source 9, respectively) belong to a conventional system for feeding the cutting members, which in figure 1 is designated as a whole as number 15, comprising a plurality of controlling and adjusting members which will not be described hereinafter, since they are of a conventional type for a person skilled in the art.

It should be highlighted that conventional controlling and adjusting members 6, 7 generally provide simple on/off solenoid valves, merely suitable to open or close the feeding of the first and/or of the second fluid to the torch depending on the working stage of the torch itself as well as of the usual pressure regulating members.

The system according to the invention provides at least for the cutting fluid, but preferably for the heating fluid as well, also the members 25A and 25B for adjusting the flowrate of the first and of the second fluid fed to the cutting and heating device 3. These members 25A and 25B for adjusting and controlling the flowrate provide, for example, ordinary valve members suitable to adjust the flowrate of a gaseous fluid and ordinary members suitable to measure the flowrate of a gaseous fluid, of a conventional type for a person skilled in the art, which can be automatically operated by control means 12 which, as will be explained in more details hereinafter, preferably belong to a control unit 16 of the overall system.

Since these fluid fuels, and particularly the first heating fluid, might consist of a mixture of gases (for example oxygen and methane), in the present context adjustment of the flowrate of the fluid fed to the cutting and heating device 3 is to be construed as the variation of all the components of said fluid or even of a single one of them. It is also highlighted that in the present context variation of the flowrate of the cutting and heating fluids is to be construed as comprising the variation of the pressure of said fluids, said flowrate and said pressure being related values so that, if the flowrate changes, pressure also varies and the other way round.

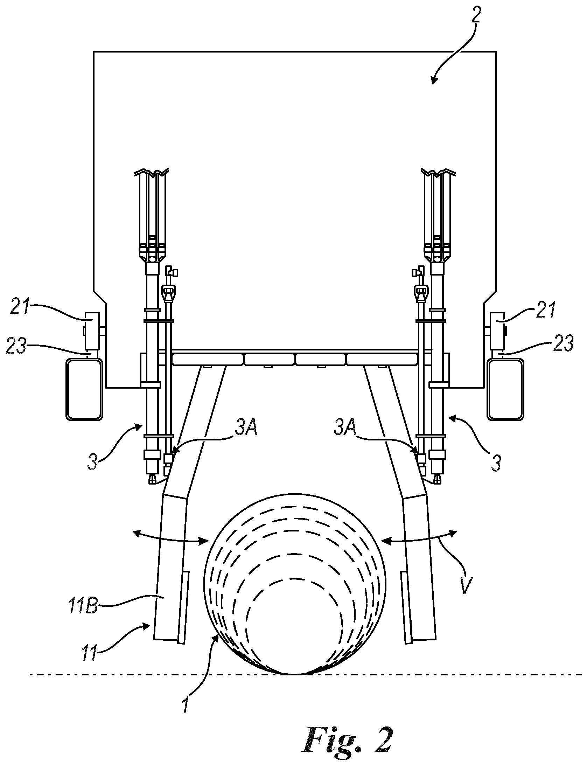

The device 2 for supporting and handling at least one cutting and heating device 3, as is conventional for a person skilled in the art, is for example of the type comprising connecting means 11 suitable to removably connect said supporting and handling device 2 to the continuous casting 1 while it is being cut or heated, as will be described in more details hereinafter. Moreover, the device 2 comprises, as is conventional for a person skilled in the art, a support and containment structure 20, in the example a box-shaped structure, comprising:
- means 21A for handling the device, having for example wheels 21 (fig. 3) connected to the customary handling members 22 and suitable to slide on rails 23 (fig. 4) arranged parallel to the feed direction Z of the continuous casting 1,
- handling members 11 A for handling the connecting means 11, comprising for example conventional clamping arms 11 B, rotating during opening and during closing (in the directions V represented in fig. 2), connected to the above handling members 11 A,
- guide members 4 A and handling means 4B for handling the handling means 4 of the cutting device 3.

The device 2 supporting and handling at least one cutting and heating device 3 also provides, as is customary for a person skilled in the art, for each cutting device, a member 3A (fig. 2e 3) suitable to generate a pilot flame, in its turn suitable to ignite the heating and cutting fluids when these are fed to the cutting device and flow out of the nozzle thereof. The pilot flame generating member 3A is, as conventional for a person skilled in the art, constrained to and flanked by the cutting and heating device 3 and moves integrally with the latter.

On account of the availability of the pilot flame generating member 3 A, the heating and cutting fluids are fed and ignited only when it is actually necessary to heat again and then cut the casting piece, but not also in a standby situation when the heating and cutting has yet to start. In other words, according to the invention, during standby, when neither heating nor cutting is accomplished, the heating and cutting fluids are not fed to the cutting and heating device 3.

Preferably, the pilot flame member 3 A is of the type described in patent application EP2599573 of the applicant. The operation of the device 2 is of a conventional type for a person skilled in the art and provides a first step wherein the cutting and heating device 3 is automatically arranged in a desired heating starting position, above the continuous casting 1. Once the correct length of the strand of the continuous casting to be cut is achieved below the cutting and heating device 3, the control unit 16 of the system (also of a conventional type for a person skilled in the art) automatically activates the connecting means 11 which constrain the device 2 to the continuous casting, hence constraining also the cutting and heating device 3 above the casting strand to be cut (fig. 3).

Once cutting is completed, the control unit 16 of the system activates the handling means 21 A for the device 2, which by means of the powered wheels 21 and of the guides 23 bring the device back to its starting position, waiting for the following cutting.

Once the device 2 is constrained to the casting, the control unit 16 of the system automatically activates the handling means for the cutting and heating device 3, the feeding means 5 and 25A and 25B for adjusting and controlling the flowrate of the fluids to said cutting and heating device 3 and the cutting and heating device is "ignited" by means of the pilot flame generating member 3A. The handling of the cutting and heating device 3 is of a conventional type and provides, for example, the movement of an individual or of a plurality of cutting devices 3 (for example two cutting members as represented in fig. 2) along guide members 4A (fig. 3) suitable to allow the cutting and heating device 3 to move, at least along two axes X, Y orthogonal to each other and perpendicular to a direction Z (fig. 3) of the casting feed 1, from an idle position Pr (fig. 4) to a plurality of predetermined positions P0-P20 above the strand 1D of the continuous casting 1 to be cut, as schematically shown in figure 4 (representing only some of the several working positions of the cutting and heating device 3). In each of the working positions P0-P20 the ending portion or nozzle 3B (fig. 4) of the cutting and heating device 3, from which the (heating and cutting) flame originates, is at a predetermined and desired distance D1-D4 from the outer surface of the strand 1D of the continuous casting 1 to be cut/heated.

Preferably this predetermined and desired distance D1-D4 from the outer surface of the strand 1D of the continuous casting 1 to be cut/heated is the same for all the cutting and heating working positions, except for the most extreme positions (for example the positions P0 and 20 of fig. 5), wherein most extreme positions are to be construed as those positions where the thickness of the casting is lower than or equal to 10% of the maximum thickness of the strand to be cut, and more preferably is lower than or equal to 5% of the maximum thickness.

Preferably, therefore with the exception of the above extreme positions, the ending portion or nozzle 3B of the cutting and heating device 3 is handled in such a manner that said nozzle is at a substantially constant distance from the outer surface of the casting to be cut (in the present context, substantially constant is to be construed as meaning that the distance may have variations amounting to +/- 10%).

Advantageously, as is conventional for a person skilled in the art, the handling means 4 of the cutting and heating device 3 are suitable to generate a signal (preferably continuous) relating to the position of the cutting and heating device 3 during cutting or heating, and said signal is processed by the control means 10 of said handling means 4 for controlling and adjusting the handling of the cutting and heating device 3 itself. The position of the cutting and heating device 3 during cutting or heating is for example detected through encoders associated to the handling means 4 or other customary detection means or sensors.

Advantageously, this signal relating to the position of the cutting and heating device 3 during cutting or heating is also used by the control means 12 controlling the flowrate of the fluids fed to the cutting and heating device, in order to adjust said flowrate.

The cutting and heating device 3 is also of a conventional type and provides, for example, five inlets 3B-F (FIG. 4) for feeding, respectively: cutting oxygen, heating oxygen, heating gas (for example methane) and an inlet and an outlet for cooling water.

Preferably, the cutting device has an elongated tubular shape and has, at one lower end, an extreme portion or nozzle 3B (FIG. 4) suitable to allow a heating flame and a cutting flame to form and suitable to be fed by a fluid whose flowrate may vary during cutting and/or heating.

As previously described for the ignition of the fluids flowing out of the nozzle 3B of the cutting and heating device 3, a pilot flame generating member 3A is associated thereto.

Preferably, the section of the casting strand to be cut may have a diameter ranging from 100mm to 2000mm.

Preferably, depending on the section of the casting strand to be cut, the cutting and heating device 3 is suitable to generate a heating/cutting flame having a length comprised between 250 mm and 2000mm.

Preferably, the fluid fuel(s) is (are) fed to the cutting and heating device at a flowrate comprised between 30 and 180 Nm3/h.

The control unit 16 of the cutting system is also substantially of a conventional type for a person skilled in the art and will hence not be described in details hereinafter. Compared to known control units, this unit has control means 12 suitable to control the means 25A and 25B for adjusting and controlling the flowrate of the fluids fed to the cutting and healing device 3, so that during cutting and/or heating the flowrate of the fluid(s) fed to said device is changed depending on the position of the cutting device compared to the strand of continuous casting to be cut.

As visible in figure 5, the cross-section of the strand 1D of the continuous casting 1 to be cut is divided into a plurality of subsections Z1-Z20 (with a different thickness), each of said subsections being associated to a predetermined flowrate of the cutting and/or heating fluid fed to the heating device 3.

The subsections Z1-Z20 into which the cross-section of the strand 1D of the casting to be cut is divided are preferably spaced evenly compared to an X-axis transversal to the Z-axis of the casting feed. For example said subsections are bound by a plurality of sides, all parallel to a vertical Y-axis (said transversal X-axis and said vertical Y-axis are orthogonal to each other and at right angles with a longitudinal Z-axis of casting 1 feed) and, on the upper and on the lower side, is bound by an upper section and an opposing lower section of the outer surface of the casting.

If a casting has a diameter S1, each subsection Z1-Zn will be preferably arranged at a distance E from one another equal to S / n, where "n" is the number of subsections into which the cross-section of the strand 1D to be cut has been divided.

Preferably, the cross-section of the strand 1D to be cut is divided into a number of subsections comprised between 3 and 50, more preferably comprised between 10 and 30 and even more preferably equal to 20.

For each subsection Z1-Z20 a working position P0-P20 of the cutting and heating device 3 is determined, associated and stored above the section F of the outer surface 1A of the strand 1D of the continuous casting 1 to be cut.

As already pointed out above, preferably all these working positions, except for the most extreme (P0 and P20) are preferably at the same distance from the outer surface 1A of the strand 1D of the continuous casting 1 to be cut. According to the invention, each of these working positions corresponds to a flowrate of the cutting fluid (and preferably also of the heating fluid) fed to the cutting and heating device 3.

Preferably the variation of the flowrate of the cutting fluid (and preferably also of the heating fluid) fed to the cutting and heating device 3 is a continuous variation.

The cutting fluid is oxygen.

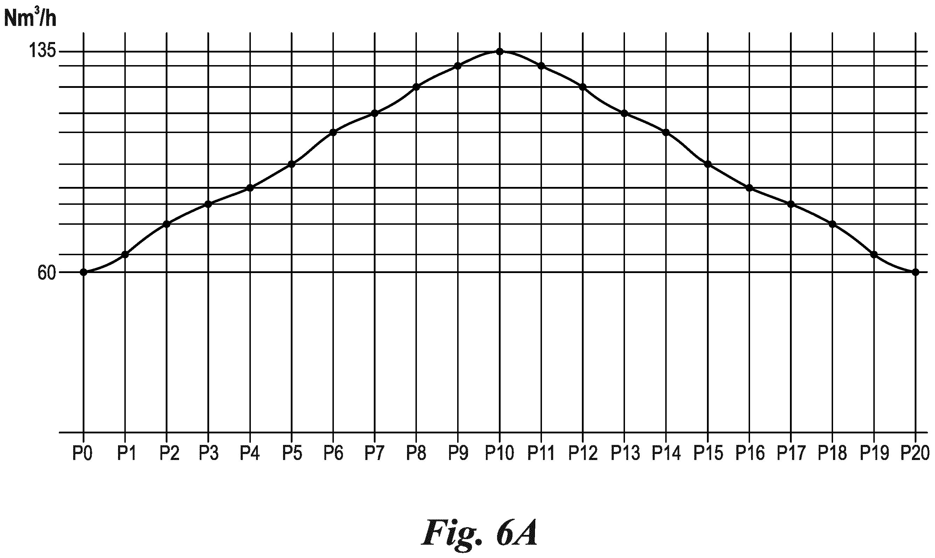

Figure 6 A shows by way of example the variation of the flowrate of the fluid fed to the cutting device 3 during cutting as its transversal position (X fig. 5) changes during cutting for a casting with a diameter of 850mm, using a single cutting device moving from one cutting start position P0 (fig. 5) to a cutting end position P20, wherein the casting cross-section has been divided into 20 evenly spaced subsections (as represented in fig. 5).

The following flowrate table can be derived from the diagram:

**TABLE 1 continuous casting with a circular cross-section of 850 mm**

| position along the X-axis (fig. 5), with subsections Z1-Z20 spaced by 42.5 mm from one another | Flowrate in: Nm3/h |
|---|---|
| P0 cutting start (subsection Z1) | 60 |
| P1 (subsection Z2) | 65 |
| P2 (subsection Z3) | 75 |
| P3 (subsection Z4) | 87 |
| P4 (subsection Z5) | 98 |
| P5 (subsection Z6) | 108 |
| P6 (subsection Z7) | 115 |
| P7 (subsection Z8) | 120 |
| P8 (subsection Z9) | 125 |
| P9 (subsection Z10) | 130 |
| P10 cutting centre (subsection Z11) | 135 |
| P11 (subsection Z12) | 130 |
| P12 (subsection Z13) | 125 |
| P13 (subsection Z14) | 120 |
| P14 (subsection Z15) | 115 |
| P15 (subsection Z16) | 108 |
| P16 (subsection Z17) | 98 |
| P17 (subsection Z18) | 87 |
| P18 (subsection Z19) | 75 |
| P19 (subsection Z20) | 65 |
| P20 cutting end | 60 |

In the following table the flowrate values for a continuous casting with a cross-section of 400MM, divided into 13 subsections are shown.

**TABLE 2 continuous casting with a circular cross-section of 400 mm**

| position along the X-axis (fig. 5), with subsections spaced by about 30 mm from one another | Flowrate in: Nm3/h |
|---|---|
| P1 cutting start | 23 |
| P2 | 26 |
| P3 | 30 |
| P4 | 35 |
| P5 | 40 |
| P6 | 43 |
| P7 cutting centre | 47 |
| P8 | 43 |
| P9 | 40 |
| P10 | 35 |
| P11 | 30 |
| P12 | 26 |
| P13 cutting end | 23 |

As can be inferred from the above tables, preferably from a cutting start position P0 to a cutting central position P10 (where the thickness S1 of the casting to be cut is the highest) the flowrate increases, preferably in a substantially continuous manner (substantially meaning that the change can have a variation by +/-10%).

Designating as Pc the maximum flowrate which can be dispensed by the torch tip during cutting, according to the invention for the lowest thicknesses of the casting strand to be cut (most extreme subsections Z1, Z20 fig. 5) the cutting fluids are fed to the torch at a flowrate comprised between 20% and 60% of Pc and for the highest thicknesses (central subsections Z10, Z11 fig. 5) the cutting fluids are fed to the torch at a flowrate comprised between 70% and 100% of Pc.

For example, for a casting with a maximum thickness of 850 mm, it is customary to use a tip with a maximum flowrate Pc=130Nm/h; and for a torch position corresponding to a subsection Z1 Z20 with a minimum thickness a flowrate amounting to about 38% of Pc is fed (50 Nm3/h), whereas for a torch position corresponding to a subsection Z10 Z11 with a maximum thickness a flowrate amounting to 100% of Pc (130 Nm3/h) is fed.

It should be pointed out that on account of the invention it is possible to make the most of the use of an optimized tip for thickness which is higher than that of the casting to be cut. For example, an optimized tip for thicknesses of 400mm (having, for example, Pc= 40 Nm3/h) can be used for a casting with a thickness of 300mm by adjusting the flowrate of the cutting fluid so that: in subsections Z10, Z11 having the maximum thickness, a flowrate amounting to only 75% of Pc is fed, whereas in subsections Z1, Z20 having the minimum thickness, a flowrate amounting to 50% of Pc is fed.

It should be highlighted that tables and/or diagrams relating to the variation of the flowrate of the cutting fluid fed to the cutting device can be obtained experimentally by a person skilled in the art.

The control unit 16 of the cutting system automatically receives from the control means 10 for handling the cutting device 3 or from the means 4 for handling said device 3 the position of the latter and, based on this piece of information, through the control means 12 and the members 25 A,B for adjusting and controlling the flowrate of the fluid to the cutting device 3, changes the feed flowrate according to predetermined values, as shown in the table above. Said predetermined values are, for example, memorized in a storage unit 12A of the control unit 16 of the system or of the control means 12. If the device 2 provides two cutting devices 3, the cutting devices both work simultaneously (as is customary for a person skilled in the art), each starting from diametrically opposite cutting start positions (P0 and P20) corresponding to subsections Z1 and Z20 having minimum thicknesses, until in proximity to the central subsection Z10 of the strand 1D of the casting to be cut, in this position the feed to one of the two cutting devices 3 is interrupted and said device is brought back to an idle position, whereas the other device is fed at the predetermined flowrate relating to said subsection Z10.

Advantageously, as already explained above, the second control means 12 and the members 25A,B for adjusting and controlling the flowrate are suitable to also change the flowrate of the first heating fluid fed to the cutting and heating device 3 during heating of the strand 1D of the continuous casting 1 to be cut, depending on the heating working position P0-P20 of said device 3 and on the subsection Z1-Z20 where the cutting and heating device is situated.

According to a first adjustment method, when the cutting and heating device is in correspondence with the central subsection Z10 of the cross-section having the maximum thickness S1 of the strand 1D of the continuous casting 1 to be heated, a lower flowrate of the heating fluid is fed compared to the flowrate fed when the cutting device is in an initial subsection Z1, Z20 having a minimum thickness. Preferably also for the adjustment of the flowrate of the heating fluid the same division in a plurality of subsections Z1-Z20 as previously described is used. The features of said subsections Z1-Z20 will not be repeated. Preferably also the variation of the flowrate of the heating fluid fed to the cutting device is a continuous variation.

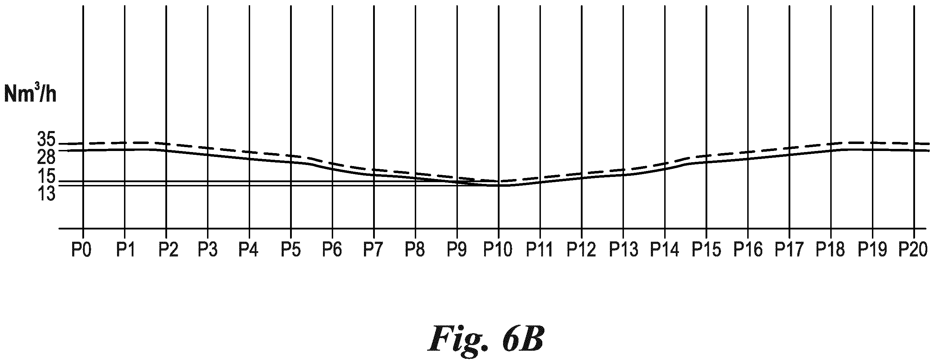

Preferably the heating fluid comprises oxygen and another fluid gas such as methane. Figure 6B represents by way of example the variation of the flowrate of the fluid fed to the cutting and heating device 3 during heating, as its transversal position (X) changes during heating for a casting with a diameter of 850mm, using a single cutting device which moves from a cutting start position P0 (fig. 5) to a cutting end position P20.

The following flowrate table can be derived from the diagram:

**TABLE 3 continuous casting with a circular cross-section of 850 mm**

| position along the X-axis, with subsections spaced by 42.5 mm from one another | Oxygen Flowrate in: Nm3/h | Methane Flowrate in: Nm3/h |
|---|---|---|
| P0 cutting start (subsection Z1) | 35 | 28 |
| P1 (subsection Z2) | 34 | 27 |
| P2 (subsection Z3) | 33 | 26 |
| P3 (subsection Z4) | 31 | 25 |
| P4 (subsection Z5) | 28 | 24 |
| P5 (subsection Z6) | 25 | 22 |
| P6 (subsection Z7) | 22 | 20 |
| P7 (subsection Z8) | 19 | 18 |
| P8 (subsection Z9) | 17 | 16 |
| P9 (subsection Z10) | 16 | 14 |
| P10 cutting centre (subsection Z11) | 15 | 13 |
| P11 (subsection Z12) | 16 | 14 |
| P12 (subsection Z13) | 17 | 16 |
| P13 (subsection Z14) | 19 | 18 |
| P14 (subsection Z15) | 22 | 20 |
| P15 (subsection Z16) | 25 | 22 |
| P16 (subsection Z17) | 28 | 24 |
| P17 (subsection Z18) | 31 | 25 |
| P18 (subsection Z19) | 33 | 26 |
| P19 (subsection Z20) | 33 | 27 |
| P20 cutting end | 34 | 28 |

In the following table the flowrate values for a continuous casting with a cross-section of 400MM are shown.

**TABLE 4 continuous casting with a circular cross-section of 400 mm**

| position along the X-axis, with subsections spaced by about 28 mm from one another | Oxygen Flowrate in: Nm3/h | Methane Flowrate in: Nm3/h |
|---|---|---|
| P1 cutting start | 29 | 21 |
| P2 | 27 | 20 |
| P3 | 24 | 19 |
| P4 | 22 | 18 |
| P5 | 20 | 17 |
| P6 | 18 | 16 |
| P7 cutting centre | 17 | 15 |
| P8 | 18 | 16 |
| P9 | 20 | 17 |
| P10 | 22 | 18 |
| P11 | 24 | 19 |
| P12 | 27 | 20 |
| P13 cutting end | 29 | 21 |

As can be inferred from the above tables, preferably from a cutting start subsection Z1 (with the lowest thickness) to a central subsection Z10 (with the highest thickness) the flowrate decreases, preferably in a substantially continuous manner.

Designating as Pc the maximum flowrate which can be dispensed by the torch tip during heating, according to the invention for the lowest thicknesses of the casting strand to be cut the cutting fluids are fed to the torch at a flowrate comprised between 70% and 100% of Pc and for the highest thicknesses the cutting fluids are fed to the torch at a flowrate comprised between 30% and 70% of Pc.

It should be highlighted that tables and/or diagrams relating to the variation of the flowrate of the heating fluid fed to the cutting and heating device can be obtained experimentally by a person skilled in the art.

Another possible adjustment of the flowrate of the heating fluid provides a progress of flowrates which is substantially the opposite of the one previously illustrated, since it provides that the lowest flowrate is fed when the cutting and heating device 3 is in correspondence with subsections Z1 Z20 having the lowest thickness and that the maximum flowrate is dispensed when said device is in correspondence with subsections Z10 Z11 having the highest thickness.

This second adjustment method id exemplified in the table below:

**TABLE 5 continuous casting with a circular cross-section of 850 mm**

| position along the X-axis, with subsections spaced by 42.5 mm from one another | Oxygen Flowrate in: Nm3/h | Methane Flowrate in: Nm3/h |
|---|---|---|
| P0 cutting start (subsection Z1) | 20 | 20 |
| P1 (subsection Z2) | 21 | 21 |
| P2 (subsection Z3) | 22 | 22 |
| P3 (subsection Z4) | 23 | 23 |
| P4 (subsection Z5) | 24 | 24 |
| P5 (subsection Z6) | 25 | 25 |
| P6 (subsection Z7) | 26 | 26 |
| P7 (subsection Z8) | 27 | 27 |
| P8 (subsection Z9) | 28 | 28 |
| P9 (subsection Z10) | 29 | 29 |
| P10 cutting centre (subsection Z11) | 30 | 30 |
| P11 (subsection Z12) | 29 | 29 |
| P12 (subsection Z13) | 28 | 28 |
| P13 (subsection Z14) | 27 | 27 |
| P14 (subsection Z15) | 26 | 26 |
| P15 (subsection Z16) | 25 | 25 |
| P16 (subsection Z17) | 24 | 24 |
| P17 (subsection Z18) | 23 | 23 |
| P18 (subsection Z19) | 22 | 22 |
| P19 (subsection Z20) | 21 | 21 |
| P20 cutting end | 20 | 20 |

According to this second method for adjusting the flowrate of the heating fluids, as can be inferred from the above tables, preferably from a cutting start subsection Z1 (with the lowest thickness) to a central subsection Z10 (with the highest thickness) the flowrate increases, preferably in a substantially continuous manner.

Designating as Pc the maximum flowrate which can be dispensed by the torch tip during heating, according to the invention for the subsections Z1 Z20 having the lowest thicknesses of the cross-section of the casting strand to be cut the cutting fluids are fed to the torch at a flowrate comprised between 30% and 70% of Pc and for the subsections Z10 Z11 having the highest thicknesses the cutting fluids are fed to the torch at a flowrate comprised between 71% and 100% of Pc. It should be highlighted that tables and/or diagrams relating to the variation of the flowrate of the heating fluid fed to the cutting and heating device can be obtained experimentally by a person skilled in the art.

According to the invention each subsection Z1-20 of the cross-section of the casting to be cut is also associated to a speed at which the cutting and heating device 3 is to be handled when it moves from the subsection Z1 having a lower thickness towards the central subsection Z10 having a higher thickness and then again towards the subsection Z20 having a lower thickness.

According to a preferred method of adjusting speed when the cutting and heating device is in correspondence with the central subsection Z10 of the cross-section having the highest thickness S1 in the strand 1D of the continuous casting 1 to be cut, the cutting and heating device is handled at a lower speed compared to the speed at which the cutting device is handled when it is in a starting subsection Z1, Z20 having the lowest thickness.

Preferably, also for the adjustment of speed the same division into a plurality of subsections Z1-Z20 as previously described is used. The features of said subsections Z1-Z20 will not be repeated.

Preferably the variation of the speed of the cutting device is also a continuous variation.

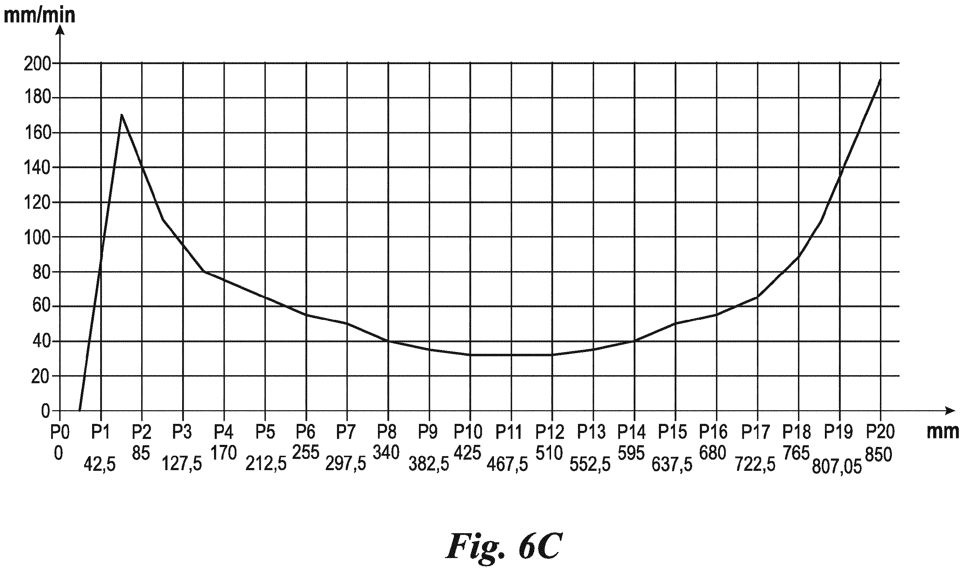

Figure 6C represents by way of example the variation of the speed of the cutting and heating device 3 during cutting and heating, as its transversal position (X fig. 5) changes during cutting and heating for a casting with a diameter of 850mm, divided into twenty subsections with a width of 42.5mm each, using a single cutting and heating device which moves from a cutting start position P0 (fig. 5) to a cutting end position P20. The diagram in fig. 6c shows as x-coordinate the distance from a cutting starting point 0 and as y-coordinate the value of the speed value expressed in millimetres per minute. Preferably, when the torch is in correspondence with the cutting starting point for a few seconds (for example for 4-8 seconds), only the heating fluid is fed while the torch is stationary, then both fluids are fed and the torch begins to be handled.

The following speed table can be derived from the diagram, the specified speed value being the one provided for an intermediate position of each subsection:

**TABLE 6 continuous casting with a circular cross-section of 850 mm**

| position along the X-axis, with subsections spaced by 42.5 mm from one another | Speed expressed in: millimetres per minute, detected in the middle point of each subsection |
|---|---|
| P0 cutting start | Heating while the torch is stationary |
| P1 (subsection Z1) | 0 |
| P2 (subsection Z2) | 170 |
| P3 (subsection Z3) | 115 |
| P4 (subsection Z4) | 80 |
| P5 (subsection Z5) | 65 |
| P6 (subsection Z6) | 55 |
| P7 (subsection Z7) | 50 |
| P8 (subsection Z8) | 40 |
| P9 (subsection Z9) | 35 |
| P10 cutting centre (subsection Z10) | 32 |
| P11 (subsection Z11) | 32 |
| P12 (subsection Z12) | 32 |
| P13 (subsection Z13) | 35 |
| P14 (subsection Z14) | 40 |
| P15 (subsection Z15) | 50 |
| P16 (subsection Z16) | 55 |
| P17 (subsection Z17) | 65 |
| P18 (subsection Z18) | 80 |
| P19 (subsection Z19) | 115 |
| P20 (subsection Z20) cutting end | 190 |

Designating as Vc the maximum speed at which the torch can be moved transversally during cutting and heating, according to the invention for the subsections Z1 Z20 having the lowest thicknesses of the cross-section of the casting strand to be cut the torch is moved at a speed comprised between 70% and 100% of Vc and for the subsections Z10 Z11 having the highest thicknesses the torch is moved at a speed comprised between 15% and 80% of Vc. It should be highlighted that tables and/or diagrams relating to the variation of the transversal handling speed of the torch of the cutting and heating device can be obtained experimentally by a person skilled in the art.

The invention also relates to a method for cutting a strand (1D) of a continuous casting (1), wherein the cross-section of said casting has a plurality of sections having different thicknesses, said cross-section being preferably circular or elliptical or H-shaped (Beam Blank), comprising the following steps:
- providing at least one cutting and heating device (3) in correspondence with said strand to be cut (1D),
- handling said cutting and heating device (3) in a plurality of different cutting and heating working positions (P0-P20) of said strand (1D) to be cut,
- feeding to the cutting and heating device (3): a first fluid for heating the strand (1D) of continuous casting to be cut and a second fluid for cutting said casting strand (1D);
wherein the flowrate of said first heating fluid and/or of said second cutting fluid fed to said cutting and heating device 3 changes while said strand 1D is being heated and/or cut.

The method according to the invention provides the following steps:
- dividing the cross-section of the strand 1D of the continuous casting 1 to be cut into a plurality of subsections (Z1-Z20) having different thicknesses (S1-S19),
- associating each of said subsections (Z1-Z20) to a predetermined flowrate of the second cutting fluid and/or of the first heating fluid to be fed to said cutting and heating device 3,
- detecting the position of the cutting and heating device 3 during cutting and/or heating compared to said subsections (Z1-Z20) into which the cross-section of the casting strand to be cut has been divided,
- depending on the detected position of the cutting and heating device 3, adjusting the flowrate of the second cutting fluid and/or of the first heating fluid fed to the cutting and heating device (3), according to the flowrate values associated to the subsection (Z1-Z20) of the cross-section where the cutting and heating device 3 is situated. Preferably the flowrates of the second cutting fluid are determined in such a way that as the thickness (S1-S19) of a subsection (Z1-Z20) increases compared to that of an adjacent subsection (Z1-Z20), the flowrate of the second cutting fluid also rises, whereas as said thickness (S1-S19) decreases, said flowrate also decreases.

Preferably each of the subsections (Z1-Z20) into which the cross-section of the strand (1D) of the continuous casting (1) to be cut is divided is also associated to a predetermined speed for the transversal handling of said cutting and heating device 3 compared to the feed direction (Z) of the continuous casting (1) during cutting by said device;
- the position of the cutting and heating device 3 during cutting compared to said subsections (Z1- Z20) into which the cross-section of the casting strand to be cut has been divided is detected,
- depending on the detected position of the cutting and heating device 3, the speed of the cutting and heating device (3) is adjusted according to the speed values associated to the subsection (Z1-Z20) of the cross-section where the cutting and heating device 3 is situated.

The speed values associated to the subsections Z1-Z20 are for example memorized in storage means (12 A) of the previously described second means for adjusting and controlling (12).

Preferably, for all subsections, if needed with the exception of the starting subsection (S0), the handling speed is determined so that as the thickness (S1-S19) of a subsection (Z2-Z20) increases compared to an adjacent subsection (Z2-Z20), the speed decreases, whereas as said thickness (S1-S19) decreases, the speed rises.

Preferably each of the subsections (Z1-Z20) into which the cross-section of the strand 1D of the continuous casting 1 to be cut has been divided is associated to a predetermined distance (D1-D4) of a nozzle (3B) of the cutting and heating device (3) from a surface of said subsections (Z1-Z20) opposite to said nozzle during cutting and/or heating;
- the position of the cutting and heating device 3 during cutting and/or heating compared to said subsections (Z1-Z20) into which the cross-section of the casting strand to be cut has been divided is detected,
- depending on the detected position of the cutting and heating device 3, the distance of the cutting and heating device (3) from the surface opposite to said nozzle of the casting strand 1D to be cut is adjusted according to the distance values associated to the subsection (Z1-Z20) of the cross-section where the cutting and heating device 3 is situated.

The distance values (D1-D4) associated to the subsections Z1-vZ20 are for example memorized in storage means (12 A) of the previously described second means for adjusting and controlling (12).

Preferably the first heating fluid and the second cutting fluid fed to the cutting and heating device 3 and flowing out of a nozzle 3B of said cutting and heating device 3 are ignited by means of a device (3 A) of the type based on pilot flame, rigidly constrained to said cutting and heating device 3, so as to feed said heating and cutting fluids only when heating and cutting are actually being accomplished.

Preferably the cutting and heating device has a maximum flowrate value (Pc) for the outflow of said second cutting fluid from a nozzle 3B suitable to allow a cutting flame to be formed, and the flowrate of the second cutting fluid fed when the cutting device (3) is in the position corresponding with the subsection (Z10) having the highest thickness (S10) of said cross-section of the strand (1D) of the continuous casting (1) to be cut is changed so that the flowrate of the second cutting fluid is comprised between 70% and 100% of said maximum flowrate (Pc), whereas the flowrate of the second cutting fluid fed when the cutting device (3) is in the position corresponding with the subsection (Z1, Z2) having the lowest thickness (S1, S19) of said cross-section of the strand (1D) of the continuous casting (1) to be cut is changed so that the flowrate of the second cutting fluid is comprised between 20% and 60% of said maximum flowrate (Pc).

Preferably during cutting both the first heating fluid and the second cutting fluid are fed to the cutting and heating device, the heating fluid having a flowrate adjusted according to one of the two previously illustrated adjustment methods. Preferably during a short starting stage of cutting (lasting for example 2 to 8 seconds) only the first heating fluid is fed to the torch and only thereafter are both heating and cutting fluids fed.

The advantages of the system and method according to the invention compared to the known cutting systems and methods are first of all a lower consumption of the fluid fed to the cutting and heating device 3, since the fed flowrates are related to the actual section which is being cut.

In addition, better-quality cutting of castings can be performed with the system and method according to the invention, without the need for following slight adjustments of the cut strand. The casting strand cut with the system and method according to the invention has a uniform cutting area, substantially without unevennesses, therefore requiring only minor end treatments.

Furthermore, the system and method according to the invention is suitable to at least partially reduce the noise during cutting and heating, since noise is related to the flowrate of the fluids fed to the cutting and heating device.

## Claims

1. A method for cutting a strand (1D) of a continuous casting (1), wherein the cross-section of said casting has a plurality of sections having different thicknesses, said cross-section being preferably circular or elliptical or H-shaped,
comprising the following steps:
- providing at least one cutting and heating device (3) in correspondence with said strand to be cut (1D),
- handling said cutting and heating device (3) in a plurality of different cutting and heating working positions (P0-P20) of said strand (1D) to be cut,
- feeding to the cutting and heating device (3): a first fluid for heating the strand (1D) of continuous casting to be cut and a second fluid for cutting said casting strand (1D);
wherein the flowrate of said first heating fluid and/or of said second cutting fluid fed to said cutting and heating device (3) changes while said strand (1D) is being heated and/or cut;
**characterized in that**:
- the cross-section of the strand (1D) of the continuous casting (1) to be cut is divided into a plurality of subsections (Z1-Z20) having different thicknesses (S1-S19),
- each of said subsections (Z1-Z20) is associated to a predetermined flowrate of the second cutting fluid and/or of the first heating fluid to be fed to said cutting and heating device (3), and **in that** it includes the following steps:
- detecting the position of the cutting and heating device (3) during cutting and/or heating with respect to said subsections (Z1-Z20) into which the cross-section of the casting strand to be cut has been divided,
- depending on the detected position of the cutting and heating device (3), the flowrate of the second cutting fluid and/or of the first heating fluid fed to the cutting and heating device (3) is adjusted according to the flowrate values associated to the subsection (Z1-Z20) of the cross-section where the cutting and heating device (3) is situated.

2. A method according to claim 1, **characterized in that** the flowrates of the second cutting fluid are determined in such a way that, as the thickness (S1-S19) of a subsection (Z1-Z20) increases compared to an adjacent subsection (Z1-Z20), the flowrate of the second cutting fluid also rises, whereas, as said thickness decreases (S1-S19), said flowrate also decreases.

3. A method according to any one of the preceding claims, **characterized in that** each of the subsections (Z1-Z20) into which the cross-section of the strand (1D) of the continuous casting (1) to be cut has been divided is associated to at least one predetermined speed for the transversal handling of said cutting and heating device 3 compared to the feed direction (Z) of the continuous casting (1) during cutting by said device; and **in that** it includes the following steps:
- detecting the position of the cutting and heating device 3 during cutting with respect to said subsections (Z1- Z20) into which the cross-section of the casting strand to be cut has been divided,
- depending on the detected position of the cutting and heating device (3), the speed of the cutting and heating device (3) is adjusted according to the speed values associated to the subsection (Z1-Z20) of the cross-section where the cutting and heating device (3) is situated.

4. A method according to claim 3, **characterized in that** the handling speed is determined so that as the thickness (S1-S19) of a subsection (Z2-Z20) increases compared to an adjacent subsection (Z2-Z20), the speed decreases, whereas as said thickness (S1-S19) decreases, the speed rises.

5. A method according to any one of the preceding claims, **characterized in that** each of the subsections (Z1-Z20) into which the cross-section of the strand (1D) of the continuous casting (1) to be cut has been divided is associated to a predetermined distance (D1-D4) of a nozzle (3B) of the cutting and heating device (3) from a surface of said subsections (Z1-Z20) opposite to said nozzle during cutting and/or heating; and **in that** it includes the following steps:
- detecting the position of the cutting and heating device (3) during cutting and/or heating with respect to said subsections (Z1- Z20) into which the cross-section of the casting strand to be cut has been divided,
- depending on the detected position of the cutting and heating device (3), the distance of the cutting and heating device (3) from the surface opposite to said nozzle of the casting strand 1D to be cut is adjusted according to the distance values associated to the subsection (Z1-Z20) of the cross-section where the cutting and heating device (3) is situated.

6. A method according to any one of the preceding claims, **characterized in that**
the first heating fluid and the second cutting fluid fed to the cutting and heating device (3) and flowing out of a nozzle (3B) of said cutting and heating device 3 are ignited by means of a device (3 A) of the type based on pilot flame, rigidly constrained to said cutting and heating device (3), so as to feed said heating and cutting fluids only when heating and cutting are actually being accomplished.

7. A method according to any one of the preceding claims, **characterized in that** the cutting and heating device has a maximum flowrate value (Pc) for the outflow of said second cutting fluid from a nozzle (3B) suitable to allow a cutting flame to be formed, and the flowrate of the second cutting fluid fed when the cutting device (3) is in the position corresponding with the subsection (Z10) having the highest thickness (S10) of said cross-section of the strand (1D) of the continuous casting (1) to be cut is changed so that the flowrate of the second cutting fluid is comprised between 70% and 100% of said maximum flowrate (Pc), whereas the flowrate of the second cutting fluid fed when the cutting device (3) is in the position corresponding with the subsection (Z1, Z2) having the lowest thickness (S1, S19) of said cross-section of the strand (1D) of the continuous casting (1) to be cut is changed so that the flowrate of the second cutting fluid is comprised between 20% and 60% of said maximum flowrate (Pc).

8. A method according to any one of the preceding claims, **characterized in that** during cutting both the first heating fluid and the second cutting fluid are fed to the cutting and heating device.

9. A method according to any one of the preceding claims, **characterized in that** the flowrate of the second cutting fluid and/or of the first heating fluid fed to the cutting and heating device (3) change in a substantially continuous manner.

10. A system for cutting a strand (1D) of a continuous casting (1), wherein the cross-section of said casting has a plurality of sections having different thicknesses, said cross-section being preferably circular or elliptical or H-shaped,
comprising:
- a device (2) for supporting and handling at least one cutting and heating device (3) for said strand (1D) of continuous casting (1) to be cut, wherein said supporting and handling device (1) provides:
- means (4) for handling said cutting and heating device (3) in a plurality of different cutting and heating working positions (P0- P20) of said strand (1D) to be cut,
- connecting means 11 suitable to removably connect said supporting and handling device (2) to the continuous casting (1) only while it is being cut or heated, so that during cutting and heating said device (2) is handled by the feed of the continuous casting in a direction parallel to the direction (Z) of feed of the continuous casting (1),
- feeding means (5, 6, 7) suitable to provide to the cutting and heating device (3):
- a first fluid for heating the strand (1D) of continuous casting to be cut,
- and a second fluid for cutting said strand (1D) of heated casting;
- first control means (10) for the handling means (4) of the cutting and heating device (3);
**characterized in that** it provides:
- means (25A 25B) for adjusting and controlling the flowrate of said second fluid for cutting said casting strand (1D) and/or of the first heating fluid;
- second means for adjusting and controlling (12), suitable to control and adjust during cutting the means (25 A, 25B) for adjusting and controlling the flowrate of said second fluid and/or of said first heating fluid and to change the flowrate of said second cutting fluid and/or of said first heating fluid fed to the cutting and heating device (3), depending on the cutting working position (P0-P20) achieved by said cutting device (3),
- said second means for adjusting and controlling (12) comprising storage means (12 A) wherein data is stored with regard to the division into subsections having different thicknesses (S1-S19) of the cross-section of the strand (1D) of the continuous casting to be cut and, for each of said subsections, a value corresponding to a predetermined desired flowrate of the second cutting fluid and/or of the first heating fluid to be fed to said cutting and heating device 3,
- said second means for adjusting and controlling (12) being suitable to control the means (25A 25B) for adjusting and controlling the flowrate of said second fluid for cutting said casting strand 1D and/or of said first heating fluid, based on the data received from the detecting means about the position of the cutting device and on the flowrate data stored by the storage means (12A).

11. A system for cutting a strand (1D) of a continuous casting 1 according to claim 10, **characterized in that**:
- in said storage means (12 A), for each of said subsections, at least one value is stored corresponding to a predetermined desired speed for the transversal handling of said cutting and heating device (3) compared to the feed direction (Z) of the continuous casting (1) during cutting by said device;
- said second means for adjusting and controlling (12) are suitable to control the means (4) for handling said cutting and heating device (3) based on the data received from the detecting means about the position of the cutting and heating device 3 and on the speed data stored by the storage means (12A).

12. A system for cutting a strand (1D) of a continuous casting (1) according to any one of claims 10 to 11, **characterized in that**:
- in said storage means (12 A), for each of said subsections, a predetermined distance (D1-D4) of a nozzle (3B) of the cutting and handling device (3) compared to a surface of said subsections (Z1-Z20) opposite to said nozzle during cutting and/or heating is stored;
- said second means for adjusting and controlling (12) are suitable to control the means (4) for handling said cutting and heating device (3) based on the data received from the detecting means about the position of the cutting and heating device (3) and on said data concerning distance stored by the storage means (12A).

13. A system for cutting a strand (1D) of a continuous casting (1) according to any one of claims 10 to 12, **characterized in that** it comprises an ignition device (3A) of the type based on pilot flame for igniting the first heating fluid and the second cutting fluid when said fluids are fed to the cutting and heating device (3) and flow out of a nozzle (3B) of said cutting and heating device (3), and **in that** said ignition device is rigidly constrained to the cutting and heating device (3) .

14. A system for cutting a strand 1D of a continuous casting 1 according to any one of claims 10 to 13, **characterized in that** the second means for adjusting and controlling (12) change in a basically continuous manner the flowrate of the second cutting fluid and/or of the first heating fluid fed to the cutting and heating device (3).

## Patentansprüche

1. Ein Verfahren zum Schneiden eines Strangs (1D) aus einem Strangguss (1), wobei der Querschnitt des genannten Gussteils eine Vielzahl von Schnitten mit unterschiedlichen Dicken aufweist, und der genannte Querschnitt vorzugsweise rund oder elliptisch beziehungsweise H-förmig ist, und
welches jeweils folgende Schritte umfasst:
- die Bereitstellung von jeweils mindestens einer Schneide- und Heizvorrichtung (3) beim dem genannten Strang (1D), der geschnitten werden soll,
- die Führung der genannten Schneide- und Heizvorrichtung (3) in einer Vielzahl verschiedener Schneide- und Heiz-Arbeitsstellungen (P0-P20) des genannten Strangs (1D), der geschnitten werden soll,
- die Speisung an die Schneide- und Heizvorrichtung (3) einer ersten Flüssigkeit zur Erhitzung des Strangs (1D) des Stranggusses, der geschnitten werden soll, und einer zweiten Flüssigkeit zum Schneiden des genannten Strangs (1D);
wobei die Durchflussmenge der genannten ersten Heizflüssigkeit und/oder der genannten zweiten Schneideflüssigkeit, mit der die genannte Schneide- und Heizvorrichtung (3) gespeist wird, sich entsprechend ändert, während der genannte Strang (1D) jeweils erhitzt und/oder geschnitten wird;
**dadurch gekennzeichnet, dass**:
- der Querschnitt des Strangs (1D) des Stranggusses (1), der geschnitten werden soll, in eine Vielzahl von Unterabschnitten (Z1 - Z20) unterteilt ist, welche jeweils unterschiedliche Dicken (S1 - S19) aufweisen,
- jeder der genannten Unterabschnitte (Z1-Z20) jeweils einer bestimmten Durchflussmenge der zweiten Schneideflüssigkeit und/oder der ersten Heizflüssigkeit zugeordnet ist, mit dem die genannte Schneide- und Heizvorrichtung (3) gespeist werden soll,
sowie dadurch, dass es folgende Schritte umfasst:
- die Erfassung der Position der Schneide- und Heizvorrichtung (3) während des Schneidens und/oder der Erhitzung in Bezug auf die genannten Unterabschnitte (Z1 - Z20), in die der Querschnitt des Gussstrangs, der geschnitten werden soll, unterteilt wurde,
- abhängig von der erfasste Position der Schneide- und Heizvorrichtung (3) wird die Durchflussmenge der zweiten Schneideflüssigkeit und/oder der ersten Heizflüssigkeit, mit der die Schneide- und Heizvorrichtung (3) gespeist wird, jeweils gemäß den Durchflussmengen-Werten justiert, welche den Unterabschnitten (Z1 - Z20) des Querschnitts zugeordnet sind, an dem die Schneide- und Heizvorrichtung (3) sich befindet.

2. Ein Verfahren gemäß Anspruch 1, **dadurch gekennzeichnet, dass** die Durchflussmengen der zweiten Schneideflüssigkeit so bestimmt werden, dass, wenn die Dicke (S1 - S19) eines Unterabschnitts (Z1 - Z20) im Vergleich zu einem anliegenden Unterabschnitt (Z1 - Z20) zunimmt, die Durchflussmenge der zweiten Schneideflüssigkeit ebenfalls ansteigt, wohingegen die genannte Durchflussmenge bei Abnahme der genannten Dicke (S1 - S19) ebenfalls abnimmt.

3. Ein Verfahren gemäß einem beliebigen der vorausgegangenen Ansprüche, **dadurch gekennzeichnet, dass** jeder der Unterabschnitte (Z1 - Z20), in die der Querschnitt des Strangs (1D) des Stranggusses (1,) der geschnitten werden soll, unterteilt wurde, mindestens einer vorbestimmten Geschwindigkeit für die Querführung der genannten Schneide- und Heizvorrichtung 3 zugeordnet ist, und zwar im Vergleich zur Vorschubrichtung (Z) des Stranggusses (1), während des Schneidens durch die genannte Vorrichtung;
sowie dadurch, dass es folgende Schritte umfasst:
- die Erfassung der Position der Schneide- und Heizvorrichtung 3 während des Schneidens in Bezug auf die genannten Unterabschnitte (Z1 - Z20), in die der Querschnitt des Gussstrangs, der geschnitten werden soll, jeweils unterteilt wurde,
- abhängig von der erfassten Position der Schneide- und Heizvorrichtung (3), die Geschwindigkeit der Schneide- und Heizvorrichtung (3) jeweils gemäß den entsprechenden Geschwindigkeitswerten justiert wird, welche dem Unterabschnitt (Z1 - Z20) des Querschnitts zugeordnet ist, an dem die Schneide- und Heizvorrichtung (3) sich befindet.

4. Ein Verfahren gemäß Anspruch 3, **dadurch gekennzeichnet, dass** die Führunggeschwindigkeit so bestimmt ist, dass wenn die Dicke (S1 - S19) eines Unterabschnitts (Z2 - Z20) jeweils im Vergleich zu einem anliegenden Unterabschnitt (Z2 - Z20) zunimmt, die Geschwindigkeit entsprechend abnimmt, wohingegen wenn die genannte Dicke (S1 -S19) abnimmt, die Geschwindigkeit entsprechend ansteigt.

5. Ein Verfahren gemäß einem beliebigen der vorausgegangenen Ansprüche, **dadurch gekennzeichnet, dass** jeder der Unterabschnitte (Z1-Z20), in die der Querschnitt des Strangs (1D) des Stranggusses (1), der geschnitten werden soll, unterteilt wurde, einer vorbestimmten Entfernung (D1 - D4) einer Ausflussöffnung (3B) der Schneide- und Heizvorrichtung (3) von einer Fläche der genannten Unterabschnitte (Z1 - Z20) zugeordnet ist, welche gegenüber der genannten Ausflussöffnung während des Schneidens und/oder Erhitzens liegt;
sowie dadurch, dass es folgende Schritte umfasst:
- die Erfassung der Position der Schneide- und Heizvorrichtung (3) während des Schneidens und/oder Erhitzens in Bezug auf die genannten Unterabschnitte (Z1 - Z20), in die der Querschnitt des Gussstrangs, der geschnitten werden soll, unterteilt wurde,
- abhängig von der der erfassten Position der Schneide- und Heizvorrichtung (3), wird die Entfernung der Schneide- und Heizvorrichtung (3) von der Fläche gegenüber der genannten Auslassöffnung des Gussstrangs 1D, der geschnitten werden soll, gemäß den Entfernungswerten justiert, welche dem Unterabschnitt (Z1 - Z20) des Querschnitts zugeordnet ist, an dem die Schneide- und Heizvorrichtung (3) sich befindet.

6. Ein Verfahren gemäß einem beliebigen der vorausgegangenen Ansprüche, **dadurch gekennzeichnet, dass** die erste Heizflüssigkeit und die zweite Schneideflüssigkeit , mit dem die Schneide- und Heizvorrichtung (3) jeweils gespeist wird und die aus einer Ausflusssöffnung (3B) der genannten Schneide- und Heizvorrichtung 3 herausfließen, mit Hilfe einer Vorrichtung (3A) des Typs mit Pilotflamme gezündet werden, welche fest mit der genannten Schneide- und Heizvorrichtung (3) verbunden ist, und zwar so, dass die genannten Heiz- und Schneideflüssigkeiten nur dann eingespeist werden, wenn effektiv Heiz- und Schneidevorgänge stattfinden.

7. Ein Verfahren gemäß einem beliebigen der vorausgegangenen Ansprüche, **dadurch gekennzeichnet, dass** die Schneide- und Heizvorrichtung einen maximalen Durchflussmengen-Wert (Pc) für den Ausfluss der genannten zweiten Schneideflüssigkeit aus einer Ausflussöffnung (3B) aufweist, welcher geeignet ist, die Bildung einer Schneideflamme zu ermöglichen, und die Durchflussmenge der zweiten Schneideflüssigkeit, welche jeweils eingespeist wird, wenn die Schneidevorrichtung (3) sich in der Position befindet, die dem Unterabschnitt (Z10) entspricht, welcher die größte Dicke (S10) des genannten Querschnitts des Strangs (1D) des Stranggusses (1), der geschnitten werden soll, aufweist, entsprechend geändert wird, so dass die Durchflussmenge der zweiten Schneideflüssigkeit zwischen 70% und 100% der genannten maximalen Durchflussmenge (Pc) liegt, wohingegen die Durchflussmenge der zweiten Schneideflüssigkeit, welche eingespeist wird, wenn die Schneidevorrichtung (3) sich in der Position befindet, die dem Unterabschnitt (Z1, Z2) mit der geringsten Dicke (S1, S19) des genannten Querschnitts des Strangs (1D) des Stranggusses (1) entspricht, welcher geschnitten werden soll, entsprechend geändert wird, und zwar so, dass die Durchflussmenge der zweiten Schneideflüssigkeit jeweils zwischen 20% und 60% der genannten maximalen Durchflussmenge (Pc) liegt.

8. Ein Verfahren gemäß einem beliebigen der vorausgegangenen Ansprüche, **dadurch gekennzeichnet, dass** während des Schneidevorgangs beide, die erste Heizflüssigkeit und die zweite Schneideflüssigkeit, in die Schneide- und Heizvorrichtung eingespeist werden.

9. Ein Verfahren gemäß einem beliebigen der vorausgegangenen Ansprüche, **dadurch gekennzeichnet, dass** die Durchflussmenge der zweiten Schneideflüssigkeit und/oder der ersten Heizflüssigkeit, die in die Schneide- und Heizvorrichtung (3) eingespeist wird, sich jeweils in einer im wesentlichen kontinuierlichen Weise ändert.

10. Ein System zum Schneiden eines Strangs (1D) eines Stranggusses (1), wobei der Querschnitt des genannten Gussteils eine Vielzahl von Schnitten mit unterschiedlichen Dicken aufweist und der genannte Querschnitt vorzugsweise rund oder elliptisch oder H-förmig ist, und das folgendes aufweist:
- eine Vorrichtung (2) zur Halterung und Führung von mindestens einer Schneide- und Heizvorrichtung (3) für den genannten Strang (1D) des Stranggusses (1), welcher geschnitten werden soll, wobei die genannte Halterungs- und Führungvorrichtung (1) folgendes vorsieht:
- Elemente (4) zur Handhabung der genannten Schneide- und Heizvorrichtung (3) in einer Vielzahl verschiedener Schneide- und Heiz-Arbeitsstellungen (P0 - P20) des genannten Strangs (1D), welcher geschnitten werden soll,
- entsprechende Verbindungselemente 11, welche geeignet sind, die genannte Halterungs- und Führungvorrichtung (2) mit dem Strangguss (1) nur dann entfernbar zu verbinden, wenn er geschnitten oder erhitzt wird, so dass die genannte Vorrichtung (2) während des Schneide- und Heizvorgangs durch die Speisung des Stranggusses in einer Richtung geführt wird, welche parallel zu der Richtung (Z) der Speisung des Stranggusses (1) verläuft,
- Speisungselemente (5, 6, 7), welche geeignet sind, die Schneide- und Heizvorrichtung (3) zu versorgen:
- eine erste Flüssigkeit zum Erhitzen des Strangs (1D) des Stranggusses, der geschnitten werden soll,
- und eine zweite Flüssigkeit zum Schneiden des genannten Strangs (1D) des erhitzten Gusses;
- erste Kontrollelemente (10) für die Elemente (4) zur Führung der Schneide- und Heizvorrichtung (3),
**dadurch gekennzeichnet, dass** es folgendes vorsieht:
- Elemente (25A, 25B) zur Justierung und Kontrolle der Durchflussmenge der genannten zweiten Flüssigkeit zum Schneiden des genannten Gussstrangs (1D) und/oder der ersten Heizflüssigkeit;
- zweite Elemente zur Justierung und Kontrolle (12), welche geeignet sind, die Elemente (25A, 25B) zur Justierung und Kontrolle der Durchflussmenge der genannten zweiten Flüssigkeit und/oder der genannten ersten Heizflüssigkeit während des Schneidens zu kontrollieren und entsprechend zu justieren, und die Durchflussmenge der genannten zweiten Schneideflüssigkeit und/oder der genannten ersten Heizflüssigkeit zu ändern, mit dem die Schneide- und Heizvorrichtung (3) gespeist wird, und zwar abhängig von der Schneide-Arbeitsstellung (P0-P20), die durch die genannte Schneidevorrichtung (3) erreicht wird,
- wobei die genannten zweiten Elemente zur Justierung und Kontrolle (12) Speicherelemente (12A) umfassen, in dem Daten über die Teilung in Unterabschnitte mit verschiedenen Diken (S1 - S19) des Querschnitts des Strangs (1D) des Stranggusses, der geschnitten werden soll, gespeichert sind, sowie für jeden der genannten Unterabschnitte jeweils ein Wert, der einer vorbestimmten gewünschten Durchflussmenge der zweiten Schneideflüssigkeit und/oder der ersten Heizflüssigkeit entspricht, welche in die genannte Schneide- und Heizvorrichtung (3) eingespeist werden soll,
- wobei die genannten zweiten Elemente zur Justierung und Kontrolle (12) geeignet sind, die Elemente (25A 25B) zur Justierung und Kontrolle der Durchflussmenge der genannten zweiten Flüssigkeit zum Schneiden des genannten Gussstrangs 1D und/oder der genannten ersten Heizflüssigkeit zu kontrollieren, und zwar basierend auf den Daten, welche mit Hilfe der Ermittlungselemente über die Position der Schneidevorrichtung gewonnen werden, sowie auf den Durchflussmengen-Daten, welche jeweils von den Speicherelementen (12A) gespeichert werden.

11. Ein System zum Schneiden eines Strangs (1D) eines Stranggusses 1 gemäß Anspruch 10, **dadurch gekennzeichnet, dass**
- in den genannten Speicherelementen (12A) für jeden der genannten Unterabschnitte jeweils mindestens ein Wert gespeichert wird, welcher einer vorbestimmten gewünschten Geschwindigkeit für die Querführung der genannten Schneide- und Heizvorrichtung (3) entspricht, welcher jeweils mit der Einspeiserichtung (Z) des Stranggusses (1) während des Schneidevorgangs durch die genannten Vorrichtung verglichen wird;
- die genannten zweiten Elemente zur Justierung und Kontrolle (12) geeignet sind, die Elemente (4) für die Führung der genannten Schneide- und Heizvorrichtung (3) zu kontrollieren basierend auf den Daten, welche aus den entsprechenden Ermittlungselementen über die Position der Schneide- und Heizvorrichtung 3 gewonnen werden, sowie auf den Geschwindigkeitsdaten, die von den entsprechenden Speicherelementen (12A) gespeichert werden.

12. Ein System zum Schneiden eines Strangs (1D) eines Stranggusses (1) gemäß einem beliebigen der Ansprüche von 10 bis 11, **dadurch gekennzeichnet, dass**
- in den genannten Speicherelementen (12A) für jeden der genannten Unterabschnitte eine vorbestimmte Entfernung (D1 - D4) einer Ausflussöffnung (3B) der Schneide- und Führungvorrichtung (3), verglichen mit einer Fläche der genannten Unterabschnitte (Z1 - Z20) gegenüber der genannten Auslassöffnung während des Schneide- und/oder Heizvorgangs, gespeichert wird;
- die genannten zweiten Elemente zur Justierung und Kontrolle (12) geeignet sind, die entsprechenden Elemente (4) zur Handhabung der genannten Schneide- und Heizvorrichtung (3) zu kontrollieren, basierend auf den Daten, welche aus den Ermittlungselementen über die Position der Schneide- und Heizvorrichtung (3) gewonnen werden, sowie auf den genannten, die jeweilige Entfernung betreffenden Daten, die von den Speicherelementen (12A) gespeichert werden.

13. Ein System zum Schneiden eines Strangs (1D) eines Stranggusses (1) gemäß einem beliebigen der Ansprüche von 10 bis 12, **dadurch gekennzeichnet, dass** es eine Zündvorrichtung (3A) des Typs umfasst, welcher auf einer Pilotflamme zur Zündung der ersten Heizflüssigkeit und der zweiten Schneideflüssigkeit basiert, wenn die genannten Flüssigkeiten in die Schneide- und Heizvorrichtung (3) eingespeist werden und aus einer Ausflussöffnung (3B) der genannten Schneide- und Heizvorrichtung (3) herausfließen, sowie dadurch, dass die genannte Zündvorrichtung fest mit der Schneide- und Heizvorrichtung (3) verbunden ist.

14. Ein System zum Schneiden eines Strangs 1D eines Stranggusses 1 gemäß einem beliebigen der Ansprüche von 10 bis 13, **dadurch gekennzeichnet, dass** die zweiten Elemente zur Justierung und Kontrolle (12) in einer im Wesentlichen kontinuierlichen Weise die Durchflussmenge der zweiten Schneideflüssigkeit und/oder der ersten Heizflüssigkeit ändern, mit der die Schneide- und Heizvorrichtung (3) jeweils gespeist wird.

## Revendications

1. Procédé de coupe d'une portion (1D) d'une coulée continue (1), dans lequel la section transversale de ladite coulée a une pluralité de sections ayant des épaisseurs différentes, ladite section transversale étant de préférence circulaire ou elliptique ou en forme de H,
comprenant les étapes suivantes :
- la fourniture d'au moins un dispositif de coupe et de chauffage (3) au niveau de ladite portion à couper (1D),
- la mise en mouvement dudit dispositif de coupe et de chauffage (3) dans une pluralité de différentes positions de travail de coupe et de chauffage (P0-P20) de ladite portion (1D) à découper,
- l'alimentation du dispositif de coupe et de chauffage (3) avec : un premier fluide pour chauffer la portion (1D) de coulée continue à couper et un deuxième fluide pour couper ladite portion de coulée (1D) ;
dans lequel le débit dudit premier fluide de chauffage et/ou dudit deuxième fluide de coupe alimentés vers ledit dispositif de coupe et de chauffage (3) varie alors que ladite portion (1D) est chauffée et/ou coupée ;
**caractérisé en ce que** :
- la section transversale de la portion (1D) de la coulée continue (1) à couper est divisée en une pluralité de sous-sections (Z1-Z20) ayant des épaisseurs différentes (S1-S19),
- chacune desdites sous-sections (Z1-Z20) est associée à un débit prédéterminé du deuxième fluide de coupe et/ou du premier fluide de chauffage à alimenter vers ledit dispositif de coupe et de chauffage (3),
et **en ce qu'**il comprend les étapes suivantes :
- la détection de la position du dispositif de coupe et de chauffage (3) durant la coupe et/ou le chauffage par rapport auxdites sous-sections (Z1-Z20) dans lesquelles la section transversale de la portion de coulée à couper a été divisée,
- en fonction de la position détectée du dispositif de coupe et de chauffage (3), le débit du deuxième fluide de coupe et/ou du premier fluide de chauffage alimentés vers le dispositif de coupe et de chauffage (3) est réglé en fonction des valeurs de débit associées à la sous-section (Z1-Z20) de la section transversale où le dispositif de coupe et de chauffage (3) est situé.

2. Procédé selon la revendication 1, **caractérisé en ce que** les débits du deuxième fluide de coupe sont déterminés de telle manière que, lorsque l'épaisseur (S1-S19) d'une sous-section (Z1-Z20) augmente par rapport à une sous-section adjacente (Z1-Z20), le débit du deuxième fluide de coupe augmente également, alors que, lorsque ladite épaisseur (S1-S19) diminue, ledit débit diminue également.

3. Procédé selon l'une quelconque des revendications précédentes, **caractérisé en ce que** chacune des sous-sections (Z1-Z20) dans lesquelles la section transversale de la portion (1D) de la coulée continue (1) à couper a été divisée est associée à au moins une vitesse prédéterminée pour la mise en mouvement transversale dudit dispositif de coupe et de chauffage 3 par rapport à la direction d'alimentation (Z) de la coulée continue (1) durant la coupe par ledit dispositif ;
et **en ce qu'**il comprend les étapes suivantes :
- la détection de la position du dispositif de coupe et de chauffage 3 durant la coupe par rapport auxdites sous-sections (Z1-Z20) dans lesquelles la section transversale de la portion de coulée à couper a été divisée,
- en fonction de la position détectée du dispositif de coupe et de chauffage (3), la vitesse du dispositif de coupe et de chauffage (3) est réglée en fonction des valeurs de vitesse associées à la sous-section (Z1-Z20) de la section transversale où le dispositif de coupe et de chauffage (3) est situé.

4. Procédé selon la revendication 3, **caractérisé en ce que** la vitesse de mise en mouvement est déterminée de manière que l'épaisseur (S1-S19) d'une sous-section (Z2-Z20) augmente par rapport à une sous-section adjacente (Z2-Z20), la vitesse diminue, alors que, lorsque ladite épaisseur (S1-S19) diminue, la vitesse augmente.

5. Procédé selon l'une quelconque des revendications précédentes, **caractérisé en ce que** chacune des sous-sections (Z1-Z20) dans lesquelles la section transversale de la portion (1D) de la coulée continue (1) à couper a été divisée est associée à une distance prédéterminée (D1-D4) d'une buse (3B) du dispositif de coupe et de chauffage (3) par rapport à une surface desdites sous-sections (Z1-Z20) opposée à ladite buse durant la coupe et/ou le chauffage ;
et **en ce qu'**il comprend les étapes suivantes :
- la détection de la position du dispositif de coupe et de chauffage (3) durant la coupe et/ou le chauffage par rapport auxdites sous-sections (Z1-Z20) dans lesquelles la section transversale de la portion de coulée à couper a été divisée,
- en fonction de la position détectée du dispositif de coupe et de chauffage (3), la distance du dispositif de coupe et de chauffage (3) par rapport à la surface opposée à ladite buse de ladite portion de coulée 1D à couper est réglée en fonction des valeurs de distance associées à la sous-section (Z1-Z20) de la section transversale où le dispositif de coupe et de chauffage (3) est situé.

6. Procédé selon l'une quelconque des revendications précédentes, **caractérisé en ce que** le premier fluide de chauffage et le deuxième fluide de coupe alimentés vers le dispositif de coupe et de chauffage (3) et s'écoulant hors d'une buse (3B) dudit dispositif de coupe et de chauffage 3 sont allumés au moyen d'un dispositif (3A) du type basé sur une flamme pilote, fixé rigidement audit dispositif de coupe et de chauffage (3), de manière à alimenter desdits fluides de chauffage et de coupe seulement quand le chauffage et la coupe sont effectivement accomplis.

7. Procédé selon l'une quelconque des revendications précédentes, **caractérisé en ce que** le dispositif de coupe et de chauffage a une valeur de débit maximal (Pc) pour l'écoulement dudit deuxième fluide de coupe hors d'une buse (3B) propre à permettre de former une flamme de coupe, et le débit du deuxième fluide de coupe alimenté quand le dispositif de coupe (3) est dans la position correspondant à la sous-section (Z10) ayant l'épaisseur la plus élevée (S10) de ladite section transversale de la portion (1D) de la coulée continue (1) à couper est changé de manière que le débit du deuxième fluide de coupe soit compris entre 70% et 100% dudit débit maximal (Pc), alors que le débit du deuxième fluide de coupe alimenté quand le dispositif de coupe (3) est dans la position correspondant à la sous-section (Z1, Z2) ayant l'épaisseur la plus faible (S1, S19) de ladite section transversale de la portion (1D) de la coulée continue (1) à couper est changé de manière que le débit du deuxième fluide de coupe soit compris entre 20% et 60% dudit débit maximal (Pc).

8. Procédé selon l'une quelconque des revendications précédentes, **caractérisé en ce que**, durant la coupe, à la fois le premier fluide de chauffage et le deuxième fluide de coupe sont alimentés vers le dispositif de coupe et de chauffage.

9. Procédé selon l'une quelconque des revendications précédentes, **caractérisé en ce que** le débit du deuxième fluide de coupe et/ou du premier fluide de chauffage alimentés vers le dispositif de coupe et de chauffage (3) varie d'une manière sensiblement continue.

10. Système de coupe d'une portion (1D) d'une coulée continue (1), dans lequel la section transversale de ladite coulée a une pluralité de sections ayant des épaisseurs différentes, ladite section transversale étant de préférence circulaire ou elliptique ou en forme de H,
comprenant :
- un dispositif (2) pour supporter et mettre en mouvement au moins un dispositif de coupe et de chauffage (3) pour ladite portion (1D) de la coulée continue (1) à couper, dans lequel ledit dispositif de support et de mise en mouvement (1) comporte :
- des moyens (4) pour mettre en mouvement ledit dispositif de coupe et de chauffage (3) dans une pluralité de différentes positions de travail de coupe et de chauffage (P0-P20) de ladite portion (1D) à couper,
- des moyens de connexion 11 propres à connecter de manière amovible ledit dispositif de support et de manipulation (2) à la coulée continue (1) seulement quand elle est coupée ou chauffée, de manière que, durant la coupe et le chauffage, ledit dispositif (2) soit mis en mouvement par l'alimentation de la coulée continue dans une direction parallèle à la direction (Z) d'alimentation de la coulée continue (1),
- des moyens d'alimentation (5, 6, 7) propres à fournir au dispositif de coupe et de chauffage (3) :
- un premier fluide pour chauffer la portion (1D) de la coulée continue à couper,
- et un deuxième fluide pour couper ladite portion (1D) de la coulée continue ;
- des premiers moyens de commande (10) pour les moyens de mise en mouvement (4) du dispositif de coupe et de chauffage (3) ;
**caractérisé en ce qu'**il comporte :
- des moyens (25A, 25B) pour régler et commander le débit dudit deuxième fluide pour couper ladite portion de coulée (1D) et/ou du premier fluide de chauffage ;
- des deuxièmes moyens de commande et de réglage (12), propres à commander et régler les moyens (25A, 25B) durant la coupe pour régler et commander le débit dudit deuxième fluide et/ou dudit premier fluide de chauffage et pour changer le débit dudit deuxième fluide de coupe et/ou dudit premier fluide de chauffage alimentés vers le dispositif de coupe et de chauffage (3), en fonction de la position de travail de coupe (P0-P20) atteinte par ledit dispositif de coupe (3),
- lesdits deuxièmes moyens de réglage et de commande (12) comprenant des moyens de stockage (12A) dans lesquels des données sont stockées en ce qui concerne la division en sous-sections ayant des épaisseurs différentes (S1-S19) de la section transversale de la portion (1D) de la coulée continue à couper et, pour chacune desdites sous-sections, une valeur correspondant à un débit désiré prédéterminé du deuxième fluide de coupe et/ou du premier fluide de chauffage à alimenter vers ledit dispositif de coupe et de chauffage (3),
- lesdits deuxièmes moyens de réglage et de commande (12) étant propres à commander les moyens (25A, 25B) pour régler et commander le débit dudit deuxième fluide pour couper ladite portion de coulée 1D et/ou dudit premier fluide de chauffage, sur la base des données reçues à partir des moyens de détection concernant la position du dispositif de coupe et des données de débit stockées dans les moyens de stockage (12A).

11. Système de coupe d'une portion (1D) d'une coulée continue 1 selon la revendication 10, **caractérisé en ce que** :
- dans lesdits moyens de stockage (12A), pour chacune desdites sous-sections, au moins une valeur est stockée, correspondant à une vitesse désirée prédéterminée pour la mise en mouvement transversale dudit dispositif de coupe et de chauffage (3), par rapport à la direction d'alimentation (Z) de la coulée continue (1) durant la coupe par ledit dispositif ;
- lesdits deuxièmes moyens de réglage et de commande (12) sont propres à commander les moyens (4) pour mettre en mouvement ledit dispositif de coupe et de chauffage (3) sur la base des données reçues à partir des moyens de détection concernant la position du dispositif de coupe et de chauffage 3 et des données de vitesse stockées dans les moyens de stockage (12A).

12. Système de coupe d'une portion (1D) d'une coulée continue (1) selon l'une quelconque des revendications 10 à 11, **caractérisé en ce que** :
- dans lesdits moyens de stockage (12A), pour chacune desdites sous-sections, une distance prédéterminée (D1-D4) d'une buse (3B) du dispositif de coupe et de manipulation (3) par rapport à une surface desdites sous-sections (Z1-Z20) opposée à ladite buse durant la coupe et/ou le chauffage est stockée ;
- lesdits deuxièmes moyens de réglage et de commande (12) sont propres à commander les moyens (4) pour mettre en mouvement ledit dispositif de coupe et de chauffage (3) sur la base des données reçues à partir des moyens de détection concernant la position du dispositif de coupe et de chauffage (3) et desdites données concernant la distance stockées dans les moyens de stockage (12A).

13. Système de coupe d'une portion (1D) d'une coulée continue (1) selon l'une quelconque des revendications 10 à 12, **caractérisé en ce qu'**il comprend un dispositif d'allumage (3A) du type basé sur une flamme pilote pour allumer le premier fluide de chauffage et le deuxième fluide de coupe quand lesdits fluides sont alimentés vers le dispositif de coupe et de chauffage (3) et s'écoulent hors d'une buse (3B) dudit dispositif de coupe et de chauffage (3), et **en ce que** ledit dispositif d'allumage est fixé rigidement audit dispositif de coupe et de chauffage (3).

14. Système de coupe d'une portion 1D d'une coulée continue 1 selon l'une quelconque des revendications 10 à 13, **caractérisé en ce que** les deuxièmes moyens de réglage et de commande (12) changent d'une manière essentiellement continue le débit du deuxième fluide de coupe et/ou du premier fluide de chauffage alimentés vers le dispositif de coupe et de chauffage (3).
